# EUROPEAN PATENT SPECIFICATION

(11) **EP 2 942 849 B1**
(45) Date of publication and mention of the grant of the patent: **28.02.2018**
(21) Application number: 13869994.7
(22) Date of filing: 07.01.2013
(51) Int. Cl.: H01H 33/56, H01H 9/52, H02B 13/02, H02B 1/56, H02G 5/10

(54) **CIRCUIT BREAKER BOX, AND SWITCHING DEVICE FOR ELECTRIC POWER**
SCHUTZSCHALTERKASTEN UND SCHALTVORRICHTUNG FÜR ELEKTRISCHE ENERGIE
BOÎTIER DE DISJONCTEUR ET DISPOSITIF DE COMMUTATION D'ALIMENTATION ÉLECTRIQUE

(43) Date of publication of application: 11.11.2015
(73) Proprietor: Mitsubishi Electric Corporation, Tokyo 100-8310 (JP)
(72) Inventor: OTANI, Hirokazu, Tokyo 100-8310 (JP); YAMASHITA, Toru, Tokyo 100-8310 (JP); YOSHIDA, Daisuke, Tokyo 100-8310 (JP)
(74) Representative: Zech, Stefan Markus
(86) International application number: PCT/JP2013/050044
(87) International publication number: WO 2014/106905

(56) References cited:
- JP-A- 2005 065 496
- JP-A- 2006 166 697
- JP-A- 2008 091 884
- JP-B2- 4 525 213
- US-A1- 2006 102 618
- US-A1- 2012 205 074

## Description

### Field

The present invention relates to a circuit breaker box and an electric-power switching device.

### Background

In electric-power systems, such as power generators or transformers, an electric-power switching device is used in which a main circuit that includes a circuit breaker and the like is housed in a box (a circuit breaker box). When the main circuit is energized, a temperature increase due to heat being generated by the circuit breaker and the like can easily become a problem. Patent Literature 1, for example, discloses a technique in which, by providing fins on the outside of a circuit breaker box, the heat generated in the circuit breaker and the like passes through the circuit breaker box and is discharged into the ambient air. US 2012/0205074 A1 proposes a cooling device for cooling medium-voltage apparatuses, where a circuit breaker is contained in a casing with fins and heat is conducted from the circuit breaker to the housing. Another such example is shown in US 2006/0102618 A1, where a circuit breaker has an elongated inner conductor and an outer conductor which surrounds the inner conductor like a housing.

### Citation List

### Patent Literature

Patent Literature 1: Japanese Patent No. 4525213

### Summary

### Technical Problem

In such an electric-power switching device, when circuit breakers or the like of the same size are used, a larger current can flow through a device in which the temperature increase, due to heat generated while the device is energized, is low. Accordingly, in a case where electric-power switching devices have the same rated energizing current, an electric-power switching device in which the temperature increase in the circuit breaker and the like is low can use a more compact circuit breaker and the like, and thus an electric-power switching device of that type can be downsized. Accordingly, there is a need for further improvement of radiation efficiency when the heat generated in a circuit breaker and the like passes through the circuit breaker box.

The present invention has been achieved in view of the above problems, and an objective of the present invention is to provide a circuit breaker box that can further improve its radiation efficiency.

### Solution to Problem

In order to solve the problem described above and achieve the objective, the present invention relates a circuit breaker box that includes a housing unit that can house therein a switching device that switches contacts and a conductor that is connected to the switching device. The housing unit has a tubular shape extending in a first direction, and includes a top surface provided horizontally, inclined surfaces extending downward from both sides of the top surface so as to be apart from each other, a bottom surface that opposes the top surface at a lower side and that has a width wider than that of the top surface, and side surfaces vertically extending from both sides of the bottom surface towards the inclined surfaces. The circuit breaker box further includes fins that are provided in an upright manner on the top surface and on the inclined surfaces. The fins include a plurality of top fins, each provided in an upright manner on the top surface and each provided in the first direction, and a plurality of side fins, each provided in an upright manner on the inclined surfaces and each provided in the first direction. The top fins and the side fins are provided in an upright manner so as to be shifted from each other when viewed from a direction perpendicular to the first direction.

### Advantageous Effects of Invention

According to the present invention, it is possible to provide a circuit breaker box that can improve its radiation efficiency.

### Brief Description of Drawings

FIG. 1 is a side view illustrating a schematic configuration of an electric-power switching device according to a first embodiment of the present invention.
FIG. 2 is a cross-sectional view in the direction of the arrow A-A illustrated in FIG. 1.
FIG. 3 is a partial enlarged view of a part B illustrated in FIG. 1.

### Description of Embodiments

Exemplary embodiments of a circuit breaker box and an electric-power switching device according to the present invention will be described below in detail with reference to the accompanying drawings. The present invention is not limited to the embodiments.

### First embodiment

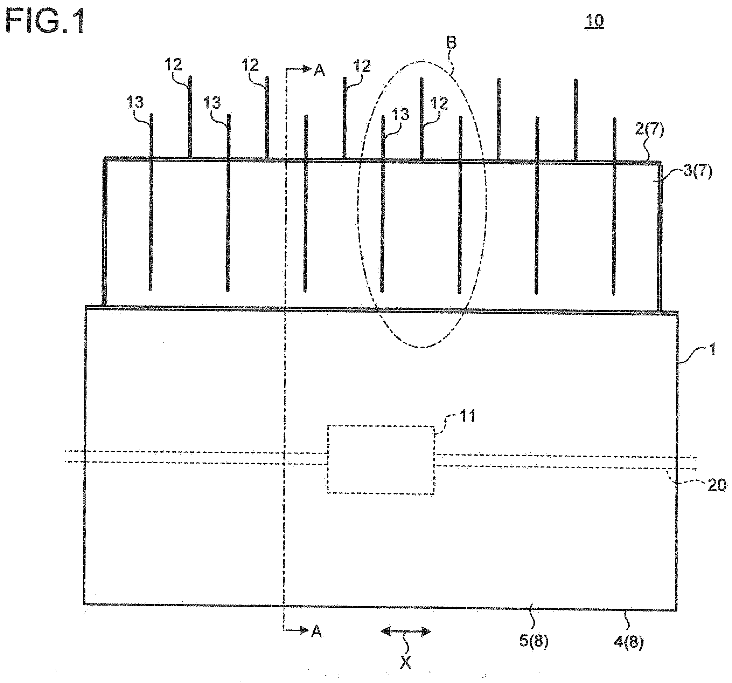

FIG. 1 is a side view illustrating a schematic configuration of an electric-power switching device according to a first embodiment of the present invention. An electric-power switching device 10 includes a conductor 20, a circuit breaker (switching device) 11, and a circuit breaker box 1. The conductor 20 is a conductor that extends in a direction indicated by an arrow X (a first direction). The circuit breaker 11 is connected to the conductor 20 in the middle of the conductor 20. The circuit breaker 11 has contacts (not illustrated) that include a movable contact and a fixed contact. Switching these contacts of the circuit breaker 11 between on and off switches the conductor 20 between an energized state and a de-energized state.

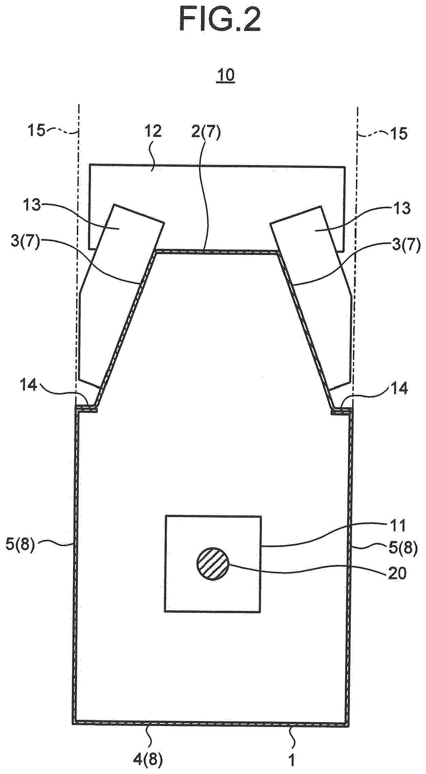

FIG. 2 is a cross-sectional view in the direction of the arrows along the line A-A illustrated in FIG. 1 (a cross-sectional view seen in the direction indicated by the arrow X). As illustrated in FIG. 2, the circuit breaker box 1 has a tubular shape extending in the direction indicated by the arrow X (also see FIG. 1). The cross-sectional shape of the circuit breaker box 1 is a shape that combines a square part 8 in a square shape with a trapezoidal part 7 in a trapezoidal shape, such that the base of the trapezoidal part 7 is laid on an upper side part of the square part 8. The tubular shape formed by the square part 8 and the trapezoidal part 7 in this manner makes a housing unit that houses therein the circuit breaker 11 and the conductor 20.

The tubular shape is described more specifically here. The tubular shape is formed to include a horizontally disposed top surface 2; inclined surfaces 3 extending downward from both sides of the top surface 2 so as to be apart from each other; a bottom surface 4 that opposes the top surface 2 at a lower side and has a width wider than that of the top surface 2; and side surfaces 5 vertically extending from both sides of the bottom surface 4 towards the respective inclined surfaces 3. Thus, the trapezoidal part 7 is formed by the top surface 2 and the inclined surfaces 3; and the square part 8 is formed by the bottom surface 4 and the side surfaces 5.

The distance between each lower end of the inclined surfaces 3 is shorter than the distance between each upper end of the side surfaces 5. In other words, the length of the lower base of the trapezoidal part 7 is shorter than the length of the upper side of the square part 8. Therefore, a coupling surface 14 that couples the upper end of the side surface 5 to the lower end of the inclined surfaces 3 is provided. When, for example, the trapezoidal part 7 and the square part 8 are formed separately, it is satisfactory if the trapezoidal part 7 is only connected to the square part 8 at the coupling surface 14.

A plurality of top fins 12 are provided, each fin being in an upright manner on the top surface 2 of the circuit breaker box 1, serving as a radiation fin, and provided in the direction indicated by the arrow X. A plurality of side fins 13 are also provided, each in an upright manner on the inclined surfaces 3 of the circuit breaker box 1, serving as a radiation fin, and provided in the direction indicated by the arrow X. As illustrated in FIG. 1 and as viewed from a direction perpendicular to the direction indicated by the arrow X, the top fins 12 and the side fins 13 are provided in an upright manner so as to be shifted from each other.

While the present embodiment illustrates an example in which one top fin 12 and one side fin 13 are alternately provided, the present embodiment is not limited to this configuration. The number of the side fins 13 provided between the top fins 12, or the number of the top fins 12 provided between the side fins 13 can be modified as appropriate.

Furthermore, the top fins 12 and the side fins 13 are formed in a size and shape that do not protrude outwardly over an extended surface 15 provided by extending the side surfaces 5. Particularly, the side fins 13 are made by chamfering one corner portion of a rectangular shape so as not to protrude outwardly over the extended surface 15.

Further, when the top fins 12 and the side fins 13 are viewed in the first direction, a part of the top fins 12 overlaps a part of the side fins 13. Specifically, the top fins 12 are formed in a size and shape that protrude outwardly over the top surface 2; and the side fins 13 are formed in size and shape that protrude upwardly over the top surface 2.

In the electric-power switching device 10 with the above configuration, heat generated causes a temperature increase in the circuit breaker 11 and the like during energization and it is radiated to the ambient air via the fins 12 and 13; and thus the temperature increase in the circuit breaker 11 and the like can be reduced. In addition to the side fins 13, because the top fins 12 are also provided, the area of the fins can be made larger and thus radiation efficiency can be improved.

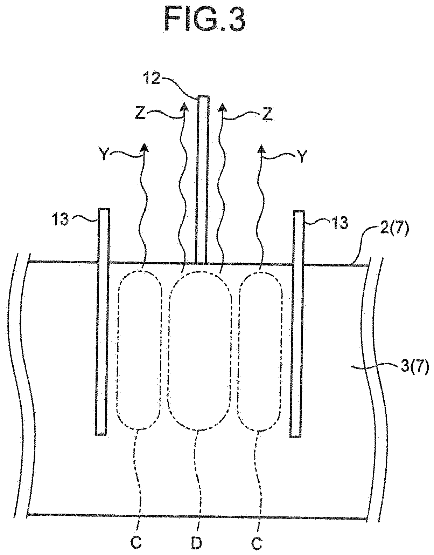

FIG. 3 is a partial enlarged view of the part B illustrated in FIG. 1. In areas C near the surface of the side fins 13 on the periphery of the circuit breaker box 1, the temperature of air is easily increased because of heat from the side fins 13. Due to the temperature increase, air in the areas C flows upward as indicated by an arrow Y.

Meanwhile, air in an area D that is further from the side fins 13 than the areas C, i.e., air between the areas C, follows the rising-up air in the areas C and rises as indicated by an arrow Z even though the temperature increase due to the heat from the side fins 13 is lower. While the air in the area D rises, the air passes near the top fin 12.

In this case, the temperature increase in the air in the area D due to the heat from the side fins 13 is lower than that in the air in the areas C. Therefore, the temperature of the air in the area D is lower than that of the air in the areas C; and the temperature difference between the air in the area D and the top fin 12 can be made large. As described above, because the air in the area D having a lower temperature can pass near the top fin 12, heat can be exchanged with the air in the area D having a large temperature difference around the top fin 12, so that the efficiency of radiation from the top fin 12 can be improved.

Furthermore, because the top fin 12 protrudes outwardly over the top surface 2 of the circuit breaker box 1, the air in the area D easily makes contact with the top fin 12. Further, because the side fins 13 protrude upwardly over the top surface 2, the air in the areas C and D is vertically guided further upward. As a result, the air in the area D is also easily guided vertically towards to the top fin 12.

Further, because the top fins 12 and the side fins 13 are formed in a size and shape that do not protrude outwardly over the extended surface 15, when a plurality of electric-power switching devices 10 is provided with the devices in a row, the distance between these devices can be reduced and the area that these devices are disposed can also be reduced. The electric-power switching device 10 is often provided as a three-phase electric-power system in which three electric-power switching devices 10 constitute one set, and thus it is a popular practice that a plurality of electric-power switching devices 10 are installed in an electric-power system.

Further, because the length of the lower side of the trapezoidal part 7 is shorter than the length of upper side of the square part 8, it is possible to form the side fins 13 in a size and shape that do not protrude outwardly over the extended surface 15, thereby increasing the area of the fins. As a result, the efficiency of radiation from the side fins 13 can be improved.

Note that the present embodiment is exemplified by a configuration in which the top fins 12 and the side fins 13 are formed separately; however, it is also possible that the top fins 12 and the side fins 13 are formed integrally. Even when these fins are formed integrally, improvement of the radiation efficiency due to the increase in the area of the fins can be achieved.

### Industrial Applicability

As described above, the circuit breaker box according to the present invention is useful for improving radiation efficiency of heat generated in a circuit breaker or the like housed in the circuit breaker box.

### Reference Signs List

1 circuit breaker box, 2 top surface, 3 inclined surface, 4 bottom surface, 5 side surface, 7 trapezoidal part, 8 square part, 10 electric-power switching device, 11 circuit breaker (switching device), 12 top fin, 13 side fin, 14 coupling surface, 15 extended surface, 20 conductor.

## Claims

1. A circuit breaker box (1) comprising a housing unit that can house therein a switching device (11) that switches contacts and a conductor (20) that is connected to the switching device (11), wherein
the housing unit has a tubular shape extending in a first direction, and includes
a top surface (2) provided horizontally,
inclined surfaces (3) extending downward from both sides of the top surface (2) so as to be apart from each other,
a bottom surface (4) that opposes the top surface (2) at a lower side and that has a width wider than that of the top surface (2),
side surfaces (5) vertically extending from both sides of the bottom surface (4) towards the inclined surfaces (3), and
the circuit breaker box (1) further comprises fins (12, 13),
**characterized in that**
the fins are provided in an upright manner on the top surface (2) and on the inclined surfaces (3),
wherein the fins (12, 13) include
a plurality of top fins (12), each provided in an upright manner on the top surface (2) and each provided in the first direction, and
a plurality of side fins (13), each provided in an upright manner on the inclined surfaces (3) and each provided in the first direction, and
the top fins (12) and the side fins (13) are provided in an upright manner so as to be shifted from each other when viewed from a direction perpendicular to the first direction.

2. The circuit breaker box (1) according to claim 1, wherein
the fins (12, 13) are formed in a shape that does not protrude outwardly over a surface that is defined by extending the side surfaces (5).

3. The circuit breaker box (1) according to claim 1 or 2, wherein
a distance between lower ends of the inclined surfaces (3) is shorter than a distance between upper ends of the side surfaces (5), and
the housing unit further includes a coupling surface (14) that couples an upper end of the side surfaces (5) to a lower end of the inclined surfaces (3).

4. An electric-power switching device (10) comprising:
the circuit breaker box (1) according to any one of claims 1 to 3; and
a switching device (11) and a conductor (20) that are housed in the housing unit of the circuit breaker box (1).

## Patentansprüche

1. Leistungsschalterkasten (1) mit einer Gehäuseeinheit, die in sich eine Schaltvorrichtung (11), die Kontakte schaltet, und einen Leiter (20) aufnehmen kann, der an die Schaltvorrichtung (11) angeschlossen ist, wobei
die Gehäuseeinheit eine rohrartige Form hat, die sich in einer ersten Richtung erstreckt, und aufweist
eine horizontal vorgesehene obere Fläche (2),
geneigte Flächen (3), die sich von beiden Seiten der oberen Fläche (2) voneinander beabstandet nach unten erstrecken,
eine untere Fläche (4), die der oberen Fläche (2) auf einer Unterseite entgegengesetzt ist und eine Breite hat, die breiter ist als diejenige der oberen Fläche (2),
Seitenflächen (5), die sich vertikal von beiden Seiten der unteren Fläche (4) zu den geneigten Flächen (3) erstrecken, und
der Leistungsschalterkasten (1) darüber hinaus Rippen (12, 13) aufweist,
**dadurch gekennzeichnet, dass**
die Rippen aufrechtstehend an der oberen Fläche (2) und an den geneigten Flächen (3) vorgesehen sind,
wobei die Rippen (12, 13) aufweisen
mehrere obere Rippen (12), die jeweils aufrechtstehend an der oberen Fläche (2) vorgesehen sind und jeweils in der ersten Richtung vorgesehen sind, und
mehrere Seitenrippen (13), die jeweils aufrechtstehend an den geneigten Flächen (3) vorgesehen sind und jeweils in der ersten Richtung vorgesehen sind, und
die oberen Rippen (12) und die Seitenrippen (13) aus einer zur ersten Richtung senkrechten Richtung gesehen aufrechtstehend voneinander versetzt vorgesehen sind.

2. Leistungsschalterkasten (1) nach Anspruch 1, wobei
die Rippen (12, 13) in einer Form ausgebildet sind, die nicht über eine Fläche nach außen vorsteht, die durch Verlängern der Seitenflächen (5) definiert ist.

3. Leistungsschalterkasten (1) nach Anspruch 1 oder 2, wobei
ein Abstand zwischen unteren Enden der geneigten Flächen (3) kürzer ist als ein Abstand zwischen oberen Enden der Seitenflächen (5), und
die Gehäuseeinheit darüber hinaus eine Anschlussfläche (14) aufweist, die ein oberes Ende der Seitenflächen (5) an ein unteres Ende der geneigten Flächen (3) anschließt.

4. Elektroenergie-Schaltvorrichtung (10) mit:
dem Leistungsschalterkasten (1) nach einem der Ansprüche 1 bis 3; und
einer Schaltvorrichtung (11) und einem Leiter (20), die in der Gehäuseeinheit des Leistungsschalterkastens (1) aufgenommen sind.

## Revendications

1. Boîtier de disjoncteur (1) comprenant une unité de logement qui peut y loger un dispositif de commutation (11) qui commute des contacts et un conducteur (20) qui est connecté au dispositif de commutation (11), sachant que
l'unité de logement a une forme tubulaire s'étendant dans une première direction, et inclut
une surface supérieure (2) disposée horizontalement,
des surfaces inclinées (3) s'étendant vers le bas à partir des deux côtés de la surface supérieure (2) de façon à être séparées l'une de l'autre,
une surface inférieure (4) qui est opposée à la surface supérieure (2) au niveau d'un côté inférieur et qui a une largeur plus grande que celle de la surface supérieure (2),
des surfaces latérales (5) s'étendant verticalement à partir des deux côtés de la surface inférieure (4) vers les surfaces inclinées (3), et
le boîtier de disjoncteur (1) comprend en outre des ailettes (12, 13),
**caractérisé en ce que**
les ailettes sont disposées de manière droite sur la surface supérieure (2) et sur les surfaces inclinées (3),
sachant que les ailettes (12, 13) incluent
une pluralité d'ailettes supérieures (12), chacune étant disposée de manière droite sur la surface supérieure (2) et chacune étant disposée dans la première direction, et
une pluralité d'ailettes latérales (13), chacun étant disposée de manière droite sur les surfaces inclinées (3) et chacune étant disposée dans la première direction, et
les ailettes supérieures (12) et les ailettes latérales (13) sont disposées de manière droite de façon à être décalées les unes par rapport aux autres lorsqu'on les regarde depuis une direction perpendiculaire à la première direction.

2. Le boîtier de disjoncteur (1) selon la revendication 1, sachant que
les ailettes (12, 13) sont formées selon une forme qui ne dépasse pas vers l'extérieur au-delà d'une surface qui est définie par extension des surfaces latérales (5).

3. Le boîtier de disjoncteur (1) selon la revendication 1 ou 2, sachant que
une distance entre des extrémités inférieures des surfaces inclinées (3) est plus courte qu'une distance entre des extrémités supérieures des surfaces inclinées (5), et
l'unité de logement inclut en outre une surface de couplage (14) qui couple une extrémité supérieure des surfaces latérales (5) à une extrémité inférieure des surfaces inclinées (3).

4. Dispositif de commutation de puissance électrique (10) comprenant :
le boîtier de disjoncteur (1) selon l'une quelconque des revendications 1 à 3 ; et
un dispositif de commutation (11) et un conducteur (20) qui sont logés dans l'unité de logement du boîtier de disjoncteur (1).
